Europäisches Patentamt

European Patent Office

Office européen des brevets

(11) Publication number: **0 021 743**
**B1**

(12) # EUROPEAN PATENT SPECIFICATION

(45) Date of publication of patent specification: **21.09.83**

(51) Int. Cl.³: **E 05 B  65/19,  B 62 D  33/06**

(21) Application number: **80301991.8**

(22) Date of filing: **13.06.80**

(54) Lock for a tiltable truck cab and vehicles including such locks.

(30) Priority: **14.06.79 GB  7920799**
**14.06.79 GB  7920800**
**14.06.79 GB  7920801**

(43) Date of publication of application:
**07.01.81 Bulletin 81/1**

(45) Publication of the grant of the patent:
**21.09.83 Bulletin 83/38**

(84) Designated Contracting States:
**BE DE FR IT NL SE**

(56) References cited:
**AT - B - 298 261**
**DE - A - 2 400 840**
**DE - A - 2 651 038**
**DE - B - 1 256 103**
**DE - B - 1 755 261**
**DE - B - 2 260 714**
**GB - A - 1 271 468**
**GB - A - 1 392 574**
**US - A - 2 740 487**
**US - A - 3 010 749**
(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **FORD MOTOR COMPANY LIMITED**
**Eagle Way**
**Brentwood Essex CM13 3BW (GB)**
(84) **BE IT NL SE**

(72) Inventor: **Slocombe, Joseph**
**15 Petunia Crescent**
**Springfield Chelmsford Essex (GB)**
Inventor: **Parry, Michael Arthur**
**36 The Oaks**
**Great Burstead Billericay Essex (GB)**

(74) Representative: **Drakeford, Robert William et al,**
**Ford Motor Company Limited 15/448, Research &**
**Engineering Centre Laindon**
**Basildon Essex SS15 6EE (GB)**

Courier Press, Leamington Spa, England

Lock for a tiltable truck cab and vehicles including such locks.

This invention relates to locks for tiltable truck cab structures, and to vehicles including such locks.

In one known type of truck, as exemplified in US—A—2740487 a cab structure is mounted on the body structure of the truck for movement between a normal operating position and a tilted position, in which access can be gained to the engine compartment of the truck. The tiltable cab structure is held in the normal operating position by a latch mechanism which is normally released by a handle located on the exterior of the cab.

One known latch mechanism comprises a keeper, a releasable latch member which is mounted for latching engagement with the keeper, and a releasing linkage for locking the latch member in engagement with the keeper. If such a mechanism is used in a lock for a tiltable cab structure, the vibrations transmitted to the latch mechanism during movement of the truck may be sufficient to move the releasing linkage to such an extent that the latch is released thus causing the cab structure to tilt whilst the vehicle is in motion.

According to the present invention there is provided a lock for retaining a tiltable cab structure in a normal operating position relative to the body structure of a vehicle and comprising a latch which includes a keeper attached to one of the structures, and a latch member attached to the other structure and mounted for latching engagement with the keeper, and a releasing linkage for locking the latch member in engagement with the keeper, the releasing linkage including an operating rod connected to the latch member, an actuating member connected to the operating rod and mounted in a housing for movement between a first position in which the latch member is locked in engagement with the keeper and a second position in which the latch member is disengageable from the keeper, characterised in that the actuating member is slidable along an axis in the housing between the first and second positions and is rotatable about the said axis relative to the housing when in the first position into a locked position in which the housing prevents the sliding movement of the actuating member.

When this lock is installed in a truck and the cab structure is in the normal operating position the actuating member will occupy the locked position. In order to release the lock the actuating member must first be rotated out of its locked position into the first position and then moved relative to the housing into the second position. Since a sequence of movements is required to effect release of the lock the risk of accidental release of the lock as a result of vibrations of the cab structure is reduced. Additionally, since the actuating member can only be moved into its locked position when the latch member is locked, the position of the actuating member relative to the housing gives a visual indication of whether the lock is locked or unlocked.

Preferably the actuating member is biased into the locked position so that the chances of accidental movement of the actuating member into the second position are further reduced. For example, the releasing linkage may comprise an operating rod which is connected to and mounted for sliding movement with the actuating member and the actuating member may be rotatable relative to the operating rod and biased into the locking position by means of a coil spring acting between the actuating member and the operating rod. Desirably the coil spring is in the form of a double helix the ends of each helix being located on diametrically opposite sides of the actuating member and operating rod respectively so that the bias applied to the actuating member by the spring is balanced between the opposite sides of the actuating member and the operating rod.

Preferably the actuating member lies wholly within the housing when the actuating member is in its locked position and projects therefrom when the actuating member is in its second position, thus giving a clearly visible indication of the condition of the lock.

In order to reduce further the risk of accidental disengagement of the lock, the actuating member is preferably adapted to receive a removable operating handle by means of which the actuating member may be moved relative to the housing. This operating handle may be stored at a point on the truck remote from the actuating member, for example, inside the cab.

A preferred embodiment of the invention will now be described by way of example only with reference to the drawings in which:

Figure 1 is a side view, partly in cross-section, of a lock for a tiltable cab structure of a truck in accordance with the invention, the lock being unlocked;

Figure 2 is a side view of a latch assembly incorporated in the lock of Figure 1;

Figure 3 is a view similar to Figure 1 showing the lock in a locked position;

Figure 4 is a view similar to Figure 2 showing the latch assembly in the locked position;

Figure 5 is an end view of the lock of Figures 1 and 2, the latch assembly having been omitted for clarity;

Figure 6 is a cross-section of the lock taken along lines VI—VI of Figure 1;

Figure 7 is a plan of an operating handle used in conjunction with the lock of Figures 1 to 6 and

Figure 8 is an "exploded" perspective view of the lock installed in a vehicle.

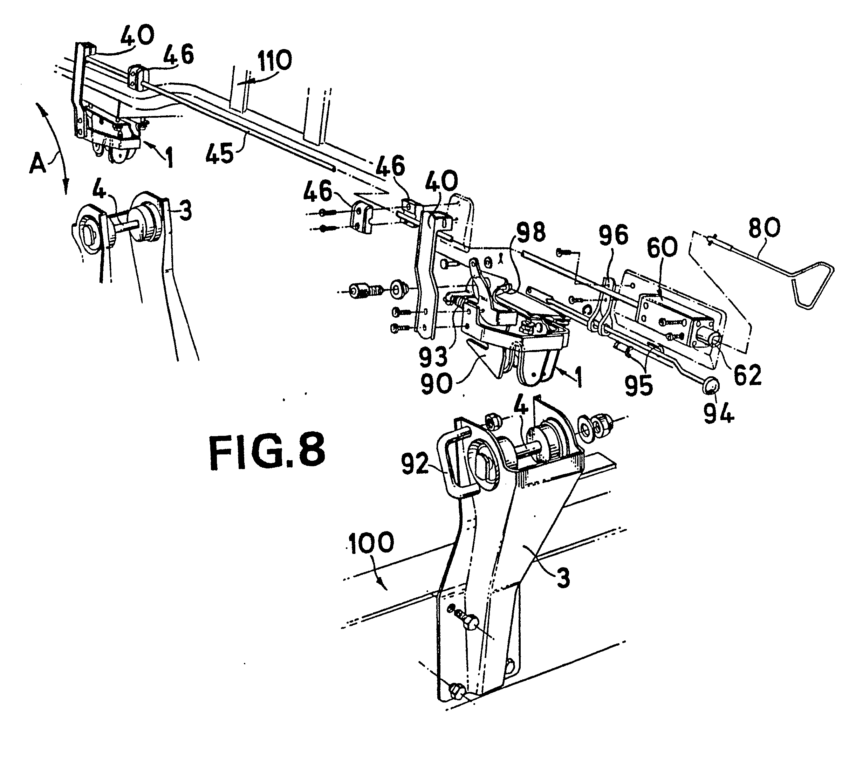

Referring to the drawings, a truck body structure 100 (Fig. 8) carries a cab structure 110 for pivotable movement as indicated by the arrow A in Figure 8 about a transverse axis adjacent the front of the truck so that the cab structure can be moved between a normal position and a tilted position in which access can be gained to the engine compartment of the truck. The cab structure is retained in its normal operating position by means of a lock which comprises two similar latch mechanisms, indicated by the reference numerals 1, located on opposite sides of the vehicle radially spaced from the transverse axis and located adjacent the rear edges of the cab and body structures. The two latch mechanisms 1 are identical in construction and only one of the latch mechanisms will be described in detail.

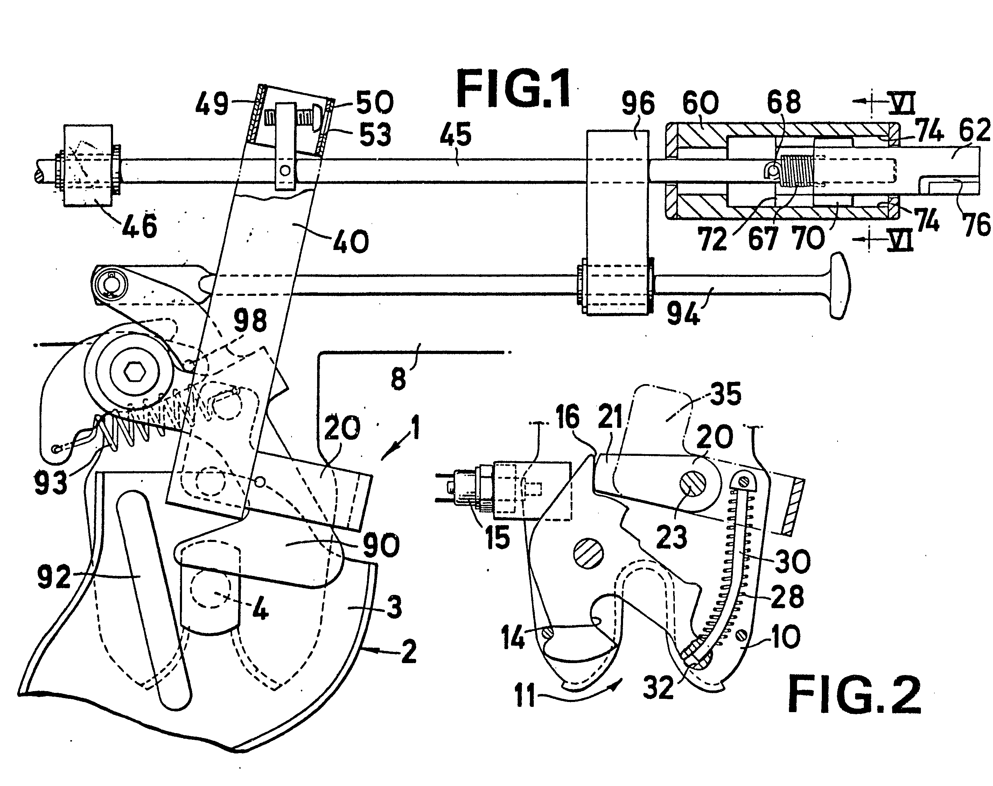

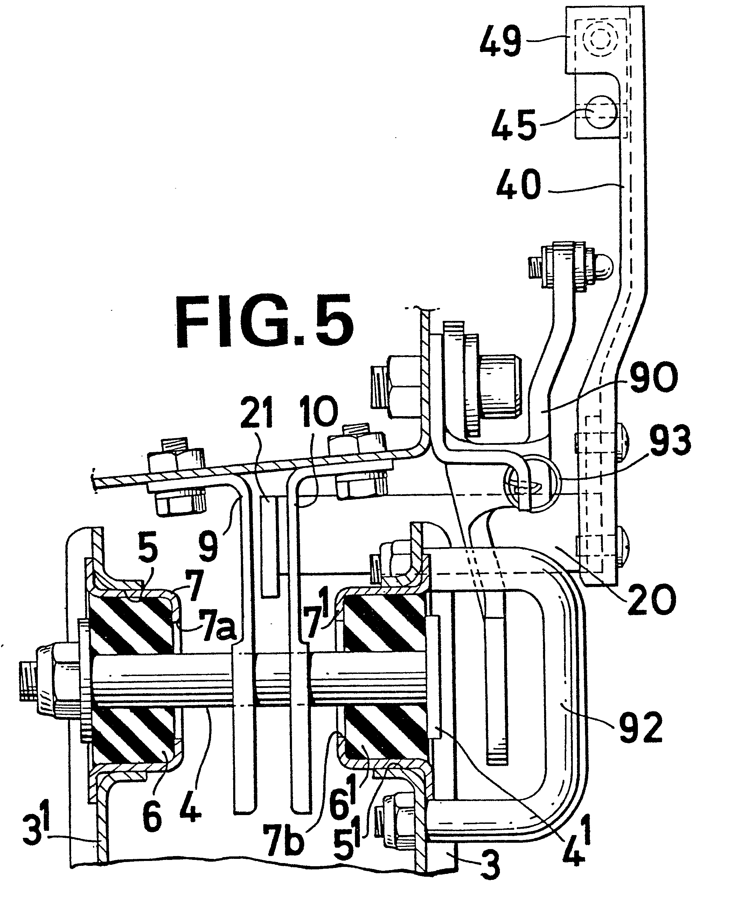

Referring to Figures 1 and 5, each latch mechanism 1 comprises a keeper 2 positioned on the body structure of the truck inwardly of the front wheel arch of the body structure. The keeper 2 comprises an upstanding bracket 3 rigidly mounted on the body structure of the truck. The bracket 3 includes two side flanges 3'. A keeper pin 4 is mounted in two apertures 5, 5' in the side flanges 3' by means of resilient rubber bushes 6, 6'. Each bush 6, 6' is supported in a metal sleeve 7, 7' which defines an aperture 7a, b, through which the pin 4 extends. The aperture 7a is larger in diameter than the pin 4. The pin 4 is retained in the bracket 3 by a head 4' on one end of the pin, and a nut and washer on the other end of the pin, the head and washer being larger in diameter than the apertures 7a, b. If desired the bushes 6, 6' can be pre-stressed by tightening the nuts on the keeper 4.

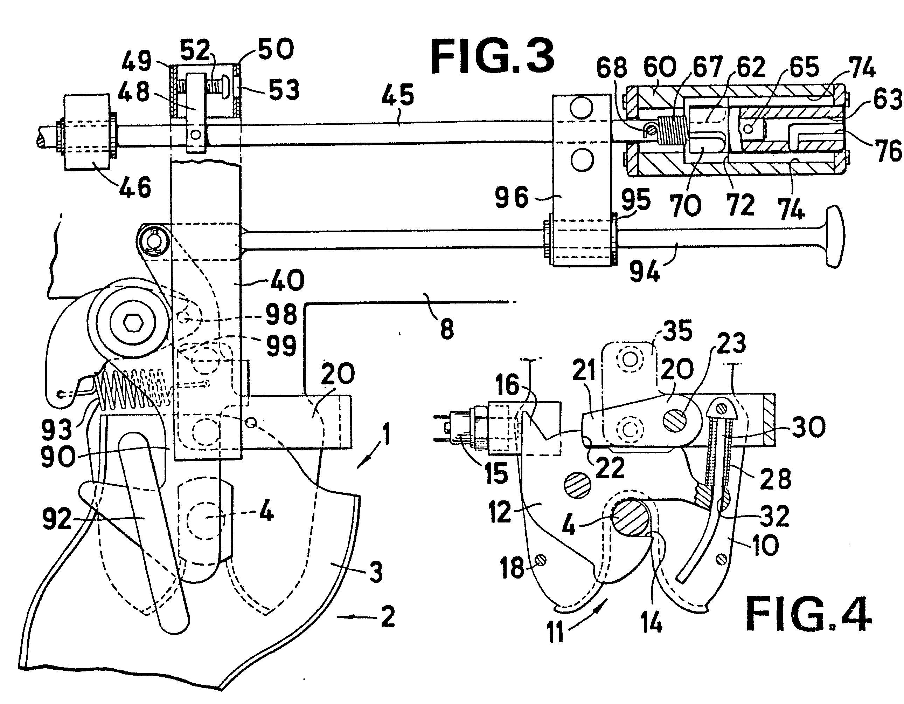

The transverse frame member 8 of the cab structure carries two adjacent depending jaws 9, 10 which define a downwardly open recess 11 within which the pin 4 of the keeper is received when the cab structure is in its normal operating position (see Figure 4). A latch member 12 is pivotally mounted between the jaws 9, 10. The member 12 also defines a recess 14 for receiving the pin 4 of the keeper 2. The member 12 is rotatable between an open position, illustrated in Figure 2 and a closed position illustrated in Figure 4. In the open position, the recess 14 in the member 12 allows the pin 4 of the keeper 2 to move into and out of the recess 11 in the jaws 9, 10. In the closed position, the latch member 12 holds the pin 4 firmly in contact with the jaws 9, 10 and prevents it from disengaging therefrom. The latch mechanisms therefore act as supports for the cab structure when the cab structure is in its normal operating position.

The rubber bushes 6, 6' permit limited relative movement between the keeper pin 4 and the bracket 3 so that vibrations between the body structure and the cab structure are damped thereby reducing the level of noise in the cab when the truck is in motion. Additionally, the bushes 6, 6' reduce the noise created when the cab is lowered onto the pins 4 into its normal operating position.

The presence of the rubber bushes 6, 6' also has the effect of reducing wear on the pin 4 caused by repeated impacts between the pin 4, the jaws 9, 10, and the latch member 12. Thus, since the pin 4 can yield relative to the bracket 3 the force of any impact applied to the pin by the cab is much smaller than the force which would be exerted if the pin were fixed.

The keeper pins 4 are both oriented at 90° to the transverse pivot axis of the cab structure. Whilst the pivotal mountings of the cab structure serve to locate the cab structure relative to the body structure in the fore-and-aft direction, the keeper pins 4 locate the cab structure in the transverse direction. Since the jaws 9, 10 define a flared entrance, they guide the cab structure into position relative to the body structure as the cab structure is moved into its normal operating position. Any minor misalignment in the relative positions of the cab and body structures due to manufacturing tolerances is accommodated by the resilient bushes 6, 6' which allow the keepers 4 to deflect relative to the brackets 3 upon closure of the cab structure. The resulting stress in the bushes 6, 6' applies a reaction force to the pins 4 which ensures that the pins 4 are held firmly against the latch members 12.

A limit switch 15 is mounted on the jaws 9, 10 for engagement with an upstanding projection 16 on the latch member 12 when the latch member 12 is in its closed position. The movement of the latch member 12 into the open position is limited by a stop 18 mounted between the two jaws, 9, 10.

The latch member 12 is retained in the closed position by means of a pawl 20. The pawl 20 is generally U-shaped one limb 21 extending between the jaws 9, 10 into engagement with an abutment 22 on the latch member 12. The pawl 20 is pivotally connected to the jaws 9, 10 so that rotation of the pawl about its pivotal axis 23 disengages the limb 21 from the abutment 22, as illustrated in Figure 2, thus permitting the latch member 12 to rotate into the open position. The latch member 12 is biased into the open position by means of a compression spring 28 which acts between the pawl 20 and the latch member 12. The compression spring 28 is located between the pawl 20 and the latch member 12 by means of a guide rail 30 around which the compression spring 28 is coiled. The guide rail 30 is pivotally connected at one end to the pawl 20 and passes through an aperture 32 in the latch member 12. The guide rail 30 is a sliding fit in the aperture 32 and is curved to permit free movement of the latch member 12 into the open position.

The other limb 35 of the U-shaped pawl 20 is bolted to an operating lever 40. A transverse operating rod 45 is mounted on the frame structure 8 of the cab by means of two spaced brackets, one of which is illustrated at 46. The operating rod 45 is connected to each of the operating levers 40 of the lock assemblies on opposite sides of the truck. The connection between the operating rod 45 and each operating lever 40 is effected by means of a block 48 which is rigidly secured to the operating rod 45 and which projects upwardly from the operating rod 45 between two flanges 49, 50 formed on the upper end of the operating lever 40. A locking bolt 52 is threadedly mounted in the block 48 and can be adjusted by passing a screw-driver through an aperture 53 in one of the flanges 50. In use, the locking bolt 52 is threaded into the block 48 so that the end of the bolt 52 engages firmly against the flange 49 of the operating lever when the lock assemblies are both locked. Tightening of the bolt 52 against the flange 49 eliminates free movement between the operating lever 40 and the pawl 20, and takes up slackness in the system due to manufacturing tolerances thus reducing rattling when the truck is in motion and preventing accidental release of the lock as a result of movement of the lever 40.

The end of the operating rod 45 is slidingly received in one end of a housing 60 mounted on the cab structure. An actuating member 62 is also mounted for sliding movement within the housing 60 between a withdrawn position (illustrated in Figure 3) and an extended position (illustrated in Figure 2). The actuating member 62 defines a central axial bore 63 within which the end of the operating rod 45 is received. The operating rod 45 is fixed within the bore 63 by means of a transverse pin 65. The pin 62 is received in a circumferential groove in the wall of the bore 63 so that the actuating member 62 can rotate relative to the operating rod 45 but is fixed for axial sliding movement therewith. The operating rod 45 and the actuating member 62 are connected together by a coil spring 67. This spring 67 is in the form of a double helix. One end of each helix is connected to a transverse pin 68 mounted in the operating rod 45 and the other end of each helix is received in an axial bore in the end of the actuating member 62. The ends of each helix are located on diametrically opposite sides of the actuating member 62 and the operating rod 45 respectively so that when the actuating member 62 is rotated relative to the operating rod 45 an even bias is applied to the opposite sides of the operating rod 45 and the actuating member 62.

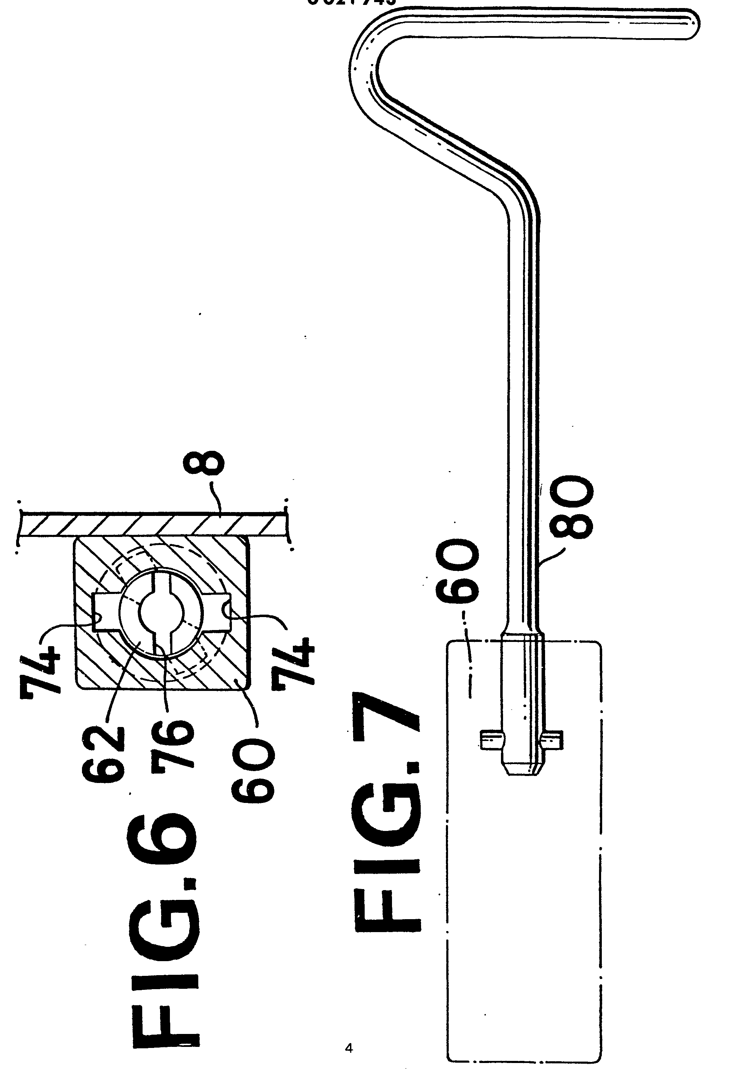

The end of the actuating member 62 adjacent the coil spring 67 includes two diametrically opposed radially extending projections 70 which, in the withdrawn position of the actuating member 62, as illustrated in Figure 3, engage with an internal wall 72 in the housing which prevents axial movement of the actuating member 62 into the extended position illustrated in Figure 2. The housing 60 defines two diametrically opposed axially extending internal grooves 74 which register with the projections 70 when the actuating member 62 is rotated through 60° from the position illustrated in Figure 3. In the position illustrated in Figure 3 therefore, the actuating member 62 is locked and cannot slide relative to the housing 60. Rotation of the actuating member 62 relative to the operating rod 45 causes the coil spring 67 to be stressed. The actuating member 62 is therefore biased into the locking position by the spring 67. At the end of the actuating member 62, remote from the coil spring 67, the central bore 63 is provided two L-shaped slots 76 which provide a bayonet connection with an operating handle 80, illustrated in Figure 7. The operating handle 80 is detachable from the actuating member 62 and therefore may be stored in a position remote from the lock, for example in the interior of the cab. This prevents the lock from being released accidentally.

The lock also incorporates a safety catch to safeguard further against accidental release of the lock. To facilitate assembly, the safety catch is constructed as a separate subassembly from the latches and the latch operating mechanisms and is operable independently thereof. The assembly comprises a safety latch member 90 which is pivotally mounted on the frame structure 8 for movement between a latched position, illustrated in Figure 3, and an unlatched position, illustrated in Figure 1. In the latched position, the safety latch 90 projects into a closed aperture defined by a U-shaped catch 92 mounted on the bracket 3 of the keeper 2. The provision of a closed aperture for engagement by the latch 90 is preferred to a simple keeper pin because the risk of disengagement of the safety catch in the event of an impact on the truck is reduced. The catch 92 is positioned relative to the safety latch member 90 so that there is no contact between the catch and the safety latch member, thereby preventing the latch member 90 from rattling against the catch 92 when the truck is in motion. The safety latch member 90 is movable against the bias of a tension spring 93 between the latched and unlatched positions by means of a releasing handle 94 mounted in a split bush 95, a bracket 96 secured by the frame member 8 adjacent the housing 60 for the actuating member 62.

When the safety catch is engaged, the end of the handle 94 lies in the same vertical plane as the end of the housing 60 so that the operator can quickly observe the condition of the safety catch.

The safety latch mechanism is provided on only one of the lock assemblies 1 so that the complete lock is operable from one side of the vehicle. The movement of the safety latch 90 between the latched and unlatched positions is limited by a single stop pin 98 which is received within a recess 99 in the safety latch member and engages opposite walls thereof in the latching and unlatching positions respectively. The stop pin 98 serves the additional function of resisting the torque which is applied to the safety latch member 90 during assembly as the pivotal mounting for the safety latch member 90 is tightened.

The operation of the lock is as follows. With the cab in its normal operating position the lock will be in the closed position illustrated in Figure 3. In this position the projections 70 engage with the internal wall 72 in the housing 60 and prevent movement of the actuating member 62, and therefore the operating rod 45 and levers 40, to the right as seen in Figure 3. Accidental blows to the levers 40 or operating rod 45 cannot therefore release the latches.

If it is desired to release the lock, the handle 80 is inserted into the slots 76 in the end of the actuating member 62 and rotated through 60° to effect a driving engagement of the inner ends of the L-shaped slots 76. The handle 80 is then rotated through a further 60° in order to bring the projections 70 on the inner end of the actuating member 62 into registry with internal grooves 74 in the housing 60. The handle 80 is then pulled so that the actuating member 62 slides in the housing 60 into the withdrawn position illustrated in Figure 2. The operating rod 45 moves with the actuating member 62, causing the locking bolt 52 to engage with the flange 50 of the operating lever 40. Movement of the operating lever 40 allows the pawl 20 to pivot about the pivot axis 23 under the influence of the compression spring 28, thereby disengaging the limb 21 of the pawl 20 from the abutment 22 on the latch member 12. The latch member 12 then rotates into its open position under the influence of the compression spring 28. The safety latch is then released by depressing the releasing handle 94 to disengage the safety latch member 90 from the catch 92, thus allowing the cab to be tilted relative to the body structure. Movement of the latch member 12 into the open position disengages the projection 16 from the switch which in turn actuates a warning light in the truck cab.

When the cab is returned to its normal operating position, the lock will initially occupy the configuration indicated in Figure 1. As the cab structure moves towards the body structure, the pin 4 of the keeper 2 enters a recess 11 in the jaws 9 and 10 and engages in the recess 14 in the latch member 12. Continued downward movement of the cab structure causes the pin 4 to rotate the latch member 12 thereby compressing the spring 28. As the cab structure approaches the end of its movement, the projection 16 engages with the limit switch and the pawl 20 rotates anticlockwise as illustrated in Figure 1 under the influence of the compression spring 28 to engage with the abutment 22 on the latch member 12, thus locking the latch member 12 in the closed position. As the pawl 20 moves into the locked position, the operating lever 40 is also moved anticlockwise as seen in the drawings so that the flange 50 engages the locking bolt 52. The continued movement of the operating lever 40 causes the operating rod 45 to slide to the left as shown in the drawings thus moving the actuating member 62 from the extended position shown in Figure 1 into the withdrawn position indicated in Figure 3. When the actuating member is fully withdrawn into the housing 60, it is rotated by the coil spring 67 so that the projections 70 are moved out of registry with the internal grooves 74. Lowering the cab into its normal operating position therefore automatically closes the latches and causes the lock to move into its locking position. No further manipulation of the lock by the operator is required. During the closing movement, of the lock assembly, the safety latch member 90 initially engages the upper limb of the catch 92 and is displaced in an anticlockwise direction as seen in the drawings against the bias of the tension spring 93. When the lock is fully closed, the safety latch member 90 moves into the locking position illustrated in Figure 3 between the two limbs of the catch 92.

Since the movement of the pawl 20 into engagement with the abutment 22 on the latch member 12 is fully engaged in its closed position, the actuating member 62 is only moved from the extended position into the withdrawn position when the lock assembly is fully closed. In this position the end face of the actuating member lies flush with the end face of the housing 60. The projection of the actuating member 62 from the end face of the housing 60 therefore gives a visible indication of the condition of the cab lock. The condition of the lock may be indicated more clearly by forming the actuating member from a plastic material such as nylon having a different colour from the material from which the end face of the housing 60 is composed.

The embodiment of the invention described above therefore provides a self-locking latch mechanism for a tiltable truck cab structure which includes a separate operating handle and which is therefore less susceptible to accidental actuation than similar devices incorporating a fixed operating handle. The condition of the lock is clearly indicated by the relative positions of the housing and the actuating member and the engagement of the actuating member with the housing when the actuating member is withdrawn prevents accidental operation of the latch assembly as a result of vibration.

**Claims**

1. A lock for retaining a tiltable cab structure (110) in a normal operating position relative to the body structure (100) of a vehicle and comprising a latch (1) which includes a keeper (2) attached to one of the structures (100, 110), and a latch member (12) attached to the other structure (100, 110) and mounted for latching engagement with the keeper (2), and a releasing linkage (20, 40, 45, 60, 62) for locking the latch member (12) in engagement with the keeper (2), the releasing linkage including an operating rod (40) connected to the latch member (12), an actuating member (62) connected to the operating rod (40) and mounted in a housing (60) for movement between a first position in which the latch member (12) is locked in engagement with the keeper (2) and a second position in which the latch member (12) is disengageable from the keeper (2), characterised in that the actuating member (62) is slidable along an axis in the housing (60) between the first and second positions and is rotatable about the said axis relative to the housing (60) when in the first position into a locked position in which the housing (60) prevents the sliding movement of the actuating member (62).

2. A lock according to Claim 1 wherein the actuating member (62) is spring biased into the locked position.

3. A lock according to Claim 2 wherein the operating rod (40) is mounted coaxially with the actuating member (62).

4. A lock according to Claim 3 wherein the actuating member (62) is biased into the locking position by means of a coil spring (67) acting between the actuating member (62) and the operating rod (40).

5. A lock according to Claim 4 wherein the coil spring (67) is in the form of a double helix, the ends of each helix being located on diametrically opposite sides of the actuating member (62) and operating rod (40) respectively.

6. A lock according to any one of Claims 1 to 5 wherein the actuating member (62) is received wholly within the housing (60) when the actuating member (62) is in the locked position and projects from the end face of the housing (60) when the actuating member (62) is in its second position.

7. A lock according to any one of Claims 1 to 6 wherein the actuating member (62) is adapted to receive a movable operating handle (80) by means of which the actuating member (62) may be moved relative to the housing (60).

8. A lock according to any one of Claims 1 to 7 comprising a further latch (1) which is spaced transversely from the first mentioned latch (1) and which comprises a keeper (2) attached to one of the structures (100, 110), a latch member (12) attached to the other of the structures (100, 110) and mounted to movement into and out of a closed position to effect latching engagement with the keeper (2), and the releasing linkage (20, 40, 45, 60, 62) includes an operating lever (40, 40) for each latch (1, 1) movable between an unlocking position, in which each latch member (12) is disengageable from its keeper (2), and a locking position, in which the latch members (12) are retained in engagement with the keepers (2), the operating levers (40, 40) being interconnected for simultaneous movement between the locked and unlocked positions.

9. A lock according to Claim 8 wherein each operating lever (40) is movable into the locking position only when the latch member (12) is in the closed position.

10. A lock according to Claim 8 or Claim 9 wherein the latch member (12) of each latch is moved into the closed position by engagement with its keeper (2).

11. A lock according to any one of Claims 8 to 10 wherein the operating lever (40) and latch member (12) of each latch (1, 1) include mutually engaging surfaces (16, 21) which allow movement of the operating lever into the locking position only when the latch member is in the closed position.

12. A lock according to any one of the preceding claims further comprising a releasable safety catch (91, 92) for retaining the cab structure (110) in the normal operating position and operable independently of the releasing linkage.

13. A lock according to Claim 12 wherein the safety catch comprises a safety latch member (90) attached to one of the structures (100, 110) and a safety catch member (92) attached to the other structure (100, 110), the safety catch member (92) being arranged for automatic locking engagement with the catch member (90) upon movement of the cab structure into its normal operating position.

14. A lock according to any one of Claims 1 to 13 wherein the or each keeper (2) comprises a bracket (3) mounted on the said one structure, and a striker pin (4) resiliently mounted in the bracket.

15. A lock according to Claim 14 wherein the axis of the striker pin (4) extends at right angles to the pivot axis of the cab structure (110).

16. A lock according to Claim 14 or Claim 15 wherein the striker pin (4) of the or each keeper (2) is mounted in its associated bracket (3) by means of rubber bushes (6, 6′).

17. A lock according to Claim 16 wherein each rubber bush (6, 6′) is mounted within a metal sleeve (7, 7′) defining an aperture (7a, 7b) through which the striker pin (4) projects.

18. A vehicle comprising a body structure (100) and a cab structure (110) mounted thereon for movement between a normal operating position and a position in which the cab structure (110) is fixed relative to the body structure (100), and a lock according to any one of the preceding claims for retaining the cab structure in the normal operating position.

**Patentansprüche**

1. Schloss zum Festhalten eines schrägstellbaren Führerhausaufbaus (110) in einer normalen Betriebsstellung bezüglich des Karosserieaufbaus (100) eines Fahrzeugs, umfassend eine Klinke (1), die ein an einem der Aufbauten (100, 110) angebrachtes Schliessblech (2) und ein Klinkenglied (12), das an dem anderen Aufbau (100, 110) angebracht und mit dem Schliessblech (2) in Rasteingriff bringbar ist, einschliesst, sowie ein Lösegestänge (20, 40, 45, 60, 62) zum Einrasten des Klinkenglieds (12) in Eingriff mit dem Schliessblech (2), wobei das Lösegestänge eine mit dem Klinkenglied (12) verbundene Bedienungsstange (40) und ein mit der Bedienungsstange (40) verbundenes und in einem Gehäuse (60) zwischen einer ersten Stellung, in der das Klinkenglied (12) in Eingriff mit dem Schliessblech (2) einrastet, und einer zweiten Stellung, in der das Klinkenglied (12) aus dem Eingriff mit dem Schliessblech (2) lösbar ist, beweglich angeordnetes Betätigungsglied (62) einschliesst, dadurch gekennzeichnet, dass das Betätigungsglied (62) entlang einer Achse im Gehäuse (60) zwischen der ersten und zweiten Stellung verschieblich und um diese Achse bezüglich des Gehäuses (60) aus der ersten Stellung in eine Verriegelungsstellung, in welcher das Gehäuse (60) die Verschiebung des Betätigungsglieds (62) verhindert, drehbar ist.

2. Schloss nach Anspruch 1, worin das Betätigungsglied (62) gegen die Verriegelungsstellung hin federvorgespannt ist.

3. Schloss nach Anspruch 2, worin die Betätigungsstange (40) koaxial mit dem Betätigungsglied (62) angeordnet ist.

4. Schloss nach Anspruch 3, worin das Betätigungsglied (62) mittels einer zwischen dem Betätigungsglied (62) und der Bedienungsstange (40) wirkenden Schraubenfeder (67) gegen die Verriegelungsstellung hin vorgespannt ist.

5. Schloss nach Anspruch 4, worin die Schraubenfeder (67) die Gestalt einer Doppelwendel besitzt, wobei die Enden jeder Wendel auf diametral gegenüberliegenden Seiten des Betätigungsglieds (62) bzw. der Bedienungsstange (40) liegen.

6. Schloss nach einem der Ansprüche 1 bis 5, worin das Betätigungsglied (62) völlig innerhalb des Gehäuses (60) aufgenommen ist, wenn sich das Betätigungsglied (62) in der Verriegelungsstellung befindet, und aus der Stirnfläche des Gehäuses (60) vorsteht, wenn sich das Betätigungsglied (62) in seiner zweiten Stellung befindet.

7. Schloss nach einem der Ansprüche 1 bis 6, worin das Betätigungsglied (62) zur Aufnahme eines beweglichen Bedienungsgriffs (80) ausgebildet ist, mittels dessen das Betätigungsglied (62) bezüglich des Gehäuses (60) bewegt werden kann.

8. Schloss nach einem der Ansprüche 1 bis 7, umfassend eine weitere Klinke (1), die in Querabstand von der zuerst erwähnten Klinke (1) angeordnet ist und aus einem an einem der Aufbauten (100, 110) angebrachten Schliessblech (2) und einem Klinkenglied (12), das an dem anderen der Aufbauten (100, 110) angebracht und in eine und aus einer Schliessstellung, um Rasteingriff mit dem Schliessblech (2) zu bewirken, bewegliche angeordnet ist, besteht, wobei das Lösegestänge (20, 40, 45, 60, 62) einen Bedienungshebel (40, 40) für jede Klinke (1, 1) einschliesst, der zwischen einer Lösestellung, in der jedes Klinkenglied (12) aus dem Eingriff mit seinem Schliessblech (2) lösbar ist, und einer Verriegelungsstellung, in der die Klinkenglieder (12) in Eingriff mit den Schliessblechen (2) gehalten werden, beweglich ist, wobei die Bedienungshebel (40, 40) zur gleichzeitigen Bewegung zwischen den verriegelten und unverriegelten Stellungen miteinander verbunden sind.

9. Schloss nach Anspruch 8, worin jeder Bedienungshebel (40) nur in die Verriegelungsstellung beweglich ist, wenn sich das Klinkenglied (12) in der Schliessstellung befindet.

10. Schloss nach Anspruch 8 oder 9, worin das Klinkenglied (12) jeder Klinke durch Eingriff mit seinem Schliessblech (2) in die Schliessstellung bewegt wird.

11. Schloss nach einem der Ansprüche 8 bis 10, worin der Bedienungshebel (40) und das Klinkenglied (12) jeder Klinke (1, 1) miteinander in Eingriff kommende Flächen (16, 21) einschliessen, die eine Bewegung des Bedienungshebels in die Verriegelungsstellung nur zulassen, wenn sich das Klinkenglied in der Schliessstellung befindet.

12. Schloss nach einem der vorhergehenden Ansprüche, ferner umfassend einen lösbaren, unabhängig vom Lösegestänge betätigbaren Sicherungsriegel (91, 92) zum Festhalten des Führerhausaufbaus (110) in der normalen Betriebsstellung.

13. Schloss nach Anspruch 12, worin der Sicherungsriegel ein an einem der Aufbauten (100, 110) angebrachtes Sicherungsklinkenglied (90) und ein an dem anderen Aufbau (100, 110) angebrachtes Sicherungsriegelglied (92) umfasst, wobei das Sicherungsriegelglied (92) so angeordnet ist, dass es bei Bewegung des Führerhausaufbaus in dessen normale Betriebsstellung automatisch mit dem Klinkenglied (90) in Rasteingriff kommt.

14. Schloss nach einem der Ansprüche 1 bis 13, worin das bzw. jedes Schliessblech (2) einen auf diesem einen Aufbau angebrachten Bügel (3) und einen in dem Bügel federnd gelagerten Schlagbolzen (4) umfasst.

15. Schloss nach Anspruch 14, worin sich die Achse des Schlagbolzens (4) rechtwinklig zur Schwenkachse des Führerhausaufbaus (110) erstreckt.

16. Schloss nach Anspruch 14 oder 15, worin der Schlagbolzen (4) des bzw. jeden Schliessblechs (2) mittels Gummibuchsen (6, 6') in seinem zugehörigen Bügel (3) befestigt ist.

17. Schloss nach Anspruch 16, worin jede Gummibuchse (6, 6') in eine Metallhülse (7, 7') gelagert ist, welche eine Oeffnung (7a, 7b) begrenzt, durch welche hindurch der Schlagbolzen (4) vorsteht.

18. Fahrzeug, umfassend eine Karosserieaufbau (100) und einen Führerhausaufbau (110), der darauf zwischen einer normalen Betriebsstellung und einer Stellung, in welcher der Führerhausaufbau (110) bezüglich des Karosserieaufbaus (100) festgelegt ist, beweglich gelagert ist, sowie ein Schloss nach einem der vorhergehenden Ansprüche zum Festhalten des Führerhausaufbaus in der normalen Betriebsstellung.

## Revendications

1. Serrure destinée à retenir une cabine basculante (110) dans une position d'utilisation normale par rapport à la caisse (100) d'un véhicule comprenant un dispositif de verrouillage (1) qui comprend un mentonnet (2) fixé à la caisse ou à la cabine (100, 110) et un loquet (12) fixé à l'autre de ces éléments (100, 110) et monté de manière à venir en prise de verrouillage avec le mentonnet (2), et une tringlerie (20, 40, 45, 60, 62) pour verrouiller le loquet (12) en prise avec le mentonnet (2), cette tringlerie comprenant une tringle de manoeuvre (40) reliée au loquet (12), un organe d'actionnement (62) relié à la tringle de manoeuvre (40) et monté dans un boîtier (60) de manière à pouvoir se déplacer entre une première position dans laquelle le loquet (12) est verrouillé en contact avec le mentonnet (2) et une seconde position dans laquelle le loquet (12) peut être dégagé du mentonnet (2), caractérisée en ce que l'organe d'actionnement (62) peut coulisser suivant un axe dans le boîtier (60) entre la première et la second position et peut tourner autour de cet axe par rapport au boîtier (60) lorsqu'il se trouve dans la première position, vers une position de verrouillage dans laquelle le boîtier (60) empêche l'organe d'actionnement (62) de coulisser.

2. Serrure suivant la revendication 1, caractérisée en ce que l'organe d'actionnement (62) est rappelé élastiquement dans la position verrouillée.

3. Serrure suivant la revendication 2, caractérisée en ce que la tringle de manoeuvre (40) est montée coaxialement à l'organe d'actionnement (62).

4. Serrure suivant la revendication 3, caractérisée en ce que l'organe d'actionnement (62) est rappelé élastiquement dans la position de verrouillage au moyen d'un ressort hélicoïdal (67) réagissant entre l'organe d'actionnement (62) et la tringle de manoeuvre (40).

5. Serrure suivant la revendication 4, caractérisée en ce que le ressort hélicoïdal (67) a la forme double hélice, les extrémités de chaque hélice agissant sur des côtés diamétralement opposés de l'organe d'actionnement (62) et de la tringle des manoeuvre (40) respectivement.

6. Serrure suivant l'une quelconque des revendications 1 à 5, caractérisée en ce que l'organe d'actionnement (62) est reçu entièrement dans le boîtier (60) lorsqu'il se trouve dans sa position verrouillée et dépasse de la face d'extrémité (60) lorsqu'il se trouve dans sa seconde position.

7. Serrure suivant l'une quelconque des revendications 1 à 6, caractérisée en ce que l'organe d'actionnement (62) est destiné à recevoir une manette mobile (80) au moyen de laquelle l'organe d'actionnement (62) peut être déplacé par rapport au boîtier (60).

8. Serrure suivant l'une quelconque des revendications 1 à 7, caractérisée en ce qu'elle comprend un autre dispositif de verrouillage (1) qui est espacé transversalement du premier dispositif de verrouillage (1) et qui comprend un mentonnet (2) fixé à un des éléments (100, 110), un loquet (12) attaché à l'autre des éléments (100, 110) et monté de manière à pivoter dans une position de fermeture et à partir de celle-ci afin d'assurer un verrouillage avec le mentonnet (2), et la tringlerie (20, 40, 45, 60, 62) comprend un levier de manoeuvre (40, 40) pour chaque dispositif de verrouillage (1, 1) mobile entre une position de déverrouillage dans laquelle chaque loquet (12) peut être dégagé de son mentonnet (2) et une position de verrouillage dans laquelle les loquets (12) sont retenus en prise avec les mentonnets (2), les leviers de manoeuvre (40, 40) étant reliés de manière à se déplacer simultanément entre la position verrouillée et la position déverrouillée.

9. Serrure suivant la revendication 8, caractérisée en ce que chaque levier de manoeuvre (40) ne peut être amené dans la position de verrouillage que lorsque le loquet (12) se trouve dans la position de fermeture.

10. Serrure suivant la revendication 8 ou 9, caractérisée en ce que le loquet (12) de chaque dispositif de verrouillage est amené dans la position de fermeture par engagement en prise avec son mentonnet (2).

11. Serrure suivant l'une quelconque des revendications 8 à 10, caractérisé en ce que le levier de manoeuvre (40) et le loquet (12) de chaque dispositif de verrouillage (1, 1) comprennent des surfaces (16, 21) destinées à venir mutuellement en contact qui permettent au levier de manoeuvre de ne se déplacer dans sa position de verrouillage que lorsque le loquet se trouve dans sa position de fermeture.

12. Serrure suivant l'une quelconque des revendications précédentes, caractérisée en ce qu'elle comprend, en outre, un arrêtoir de sûreté déverrouillable (91, 92) destiné à retenir la cabine (110) dans sa position d'utilisation normale et pouvant être actionné indépendamment de la tringle de déverrouillage.

13. Serrure suivant la revendication 12, caractérisée en ce que l'arrêtoir de sûreté comprend un loquet de sûreté (90) fixé à un des éléments (100, 110) et un arrêtoir de sûreté (92) fixé à l'autre élément (100, 110), l'arrêtoir de sûreté (92) étant destiné à venir automatique en prise de verrouillage avec l'arrêtoir (90) lorsque la cabine est amenée dans sa position d'utilisation normale.

14. Serrure suivant l'une quelconque des revendications 1 à 13, caractérisée en ce que le mentonnet ou chacun d'eux comprend une

**0 021 743**

console (3) montée sur l'un des éléments et une broche de mentonnet (4) montée élastiquement dans la console.

15. Serrure suivant la revendication 14, caractérisée en ce que la broche de mentonnet (4) est perpendiculaire à l'axe de pivotement de la cabine (110).

16. Serrure suivant la revendication 14 ou 15, caractérisée en ce que la broche de mentonnet (4) de chaque mentonnet (2) est montée sur sa console (3) au moyen de bagues en caoutchouc (6, 6').

17. Serrure suivant la revendication 16, caractérisée en ce que chaque bague de caoutchouc (6, 6') est montée dans une douille métallique (7, 7') délimitant une ouverture (7a, 7b) traversée par la broche de mentonnet (4).

18. Véhicule caractérisé en ce qu'il comprend une caisse (100) et une cabine (110) montée sur la caisse de manière à se déplacer entre une position d'utilisation normale et une position dans laquelle elle est basculée par rapport à la caisse (100) et une serrure suivant l'une quelconque des revendications précédentes pour retenir la cabine dans la position d'utilisation normale.

# FIG.1

49  50
53
45
96  60  68  VI  74  62
46
40
72  67  70  VI  76
74
74
98
8
93
20  1
35
16  21  20
15  23  30
92
90  28
4  14  10
3
11  32  FIG.2
2

0021743

# FIG.3

49 52 50
48 53
45
46

68 60 67 62 65 74
63
76

96 95 94
70 72 74

40
98
99
8

20
93 1
90 4
92 3
2

16 35 23
21 20
30
15 22 28
12 4 32
18 10
11 14

# FIG.4

0021743

FIG.5

# FIG.6

# FIG.7

0 021 743

FIG.8

0 021 743